# EUROPEAN PATENT APPLICATION

(11) **EP 3 901 202 A1**
(43) Date of publication of application: **27.10.2021**
(21) Application number: 20748702.6
(22) Date of filing: 17.01.2020
(51) Int. Cl.: C08J 7/16, B32B 7/12, B32B 27/38, B32B 37/12, C08J 5/12, C09J 5/00, C09J 5/02, C09J 11/06, C09J 163/00

(54) **SURFACE MODIFICATION METHOD, BONDING METHOD, SURFACE MODIFICATION MATERIAL, AND ASSEMBLY**

(30) Priority: 30.01.2019 JP 2019014814
(71) Applicant: MITSUBISHI HEAVY INDUSTRIES, LTD., Chiyoda-ku, Tokyo 100-8332 (JP); Kyushu University, National University Corporation, Nishi-ku Fukuoka-shi Fukuoka 819-0395 (JP)
(72) Inventor: FUKUDA, Akio, Tokyo 100-8332 (JP); TAKAGI, Kiyoka, Tokyo 100-8332 (JP); HASEGAWA, Kouichi, Tokyo 100-8332 (JP); ABE, Toshio, Nagoya-shi, Aichi 453-0862 (JP); TAKAHARA, Atsushi, Fukuoka-shi, Fukuoka 819-0395 (JP)
(74) Representative: Hoffmann Eitle
(86) International application number: PCT/JP2020/001486
(87) International publication number: WO 2020/158453

(57) **Abstract**

A surface modification method for modifying a surface of, in particular, a polymer material having a ketone group, a bonding method, a surface modified material, and a joined product are provided. The surface modification method is for modifying a surface 10a of a polymer material 10 having a ketone group and includes a contact step and a grafting step. At the contact step, an organic compound 12 having an epoxy group and an unsaturated bond-containing group are brought into contact with the polymer material 10. At the grafting step, light energy 16 is applied to the polymer material 10 being in contact with the organic material 12 to radicalize the ketone group in the polymer material 10, and the radicalized ketone group in the polymer material 10 is reacted with the unsaturated bond-containing group in the organic compound 12 to graft an organic compound chain 20c having the epoxy group based on the organic compound 12 onto a position 10b where the ketone group in the polymer material 10 existed.

## Description

### Field

The present invention relates to a surface modification method, a bonding method, a surface-modified material, and a joined product.

### Background

Lightweight and durable polymer materials have been beginning to be used in structures constituting structure products such as aircrafts, automobiles, vehicles, and ships. It has been known that the surface of these polymer materials are coated with an epoxy resin curing agent as a paint, an adhesive, a floor material, a sealant, and the like (refer to Patent Literature 1).

### Citation List

### Patent Literature

Patent Literature 1: WO 2017/175740

### Summary

### Technical Problem

Depending on the properties of the polymer materials, various compounds exemplified as the epoxy resin curing agent in Patent Document 1 may fail to be used as paints, adhesives, floor materials, sealants, and the like in some cases. In other words, there is a problem in which various compounds as described above cannot be applied to the surfaces of the polymer materials depending on the properties of the polymer material.

The present invention has been made in view of the above, and an object of the present invention is to provide a surface modification method for modifying a surface of, in particular, a polymer material having a ketone group; a bonding method; a surface-modified material; and a joined product.

### Solution to Problem

To solve the above-described problem and achieve the object, a surface modification method for modifying a surface of a polymer material having a ketone group includes a contact step of bringing an organic compound having an epoxy group and an unsaturated bond-containing group into contact with the polymer material; and a grafting step of applying light energy to the polymer material being in contact with the organic material to radicalize the ketone group in the polymer material and reacting the radicalized ketone group in the polymer material with the unsaturated bond-containing group in the organic compound to graft an organic compound chain having the epoxy group based on the organic compound onto a position where the ketone group in the polymer material existed.

According to this constitution, the surface of the polymer material can be modified by causing the radical reaction of the ketone group on the surface of the polymer material with the organic compound having the epoxy group and the unsaturated bond-containing group, whereby the organic compound chain having the epoxy group based on this organic compound is grafted onto a position where the ketone group in this polymer material existed.

In this constitution, it is preferable that the polymer material has an aromatic ketone group containing a ketone group, and at the grafting step, the organic compound chain having the epoxy group based on the organic compound is grafted onto a position where the aromatic ketone group in the polymer material existed. According to this constitution, the surface of the polymer material can be similarly modified even when the polymer material has low reactivity and thus is considered to be difficult to modify the surface thereof, like a polymer material in which the ketone group existing on the surface is the aromatic ketone group.

In these constitutions, it is preferable that the organic compound has a glycidyl group containing an epoxy group, and at the grafting step, the organic compound chain having the glycidyl group based on the organic compound is grafted to the polymer material. According to this constitution, the organic compound can similarly contribute to the modification of the surface of the polymer material even when the epoxy group is the glycidyl group.

In these constitutions, it is preferable that the organic compound has a methacrylic acid group containing an unsaturated bond-containing group, and at the grafting step, the radicalized ketone group in the polymer material is reacted with the methacrylic acid group in the organic compound. According to this constitution, the surface of this polymer material can be more suitably modified because the methacrylic acid group can more suitably react with the radicalized ketone group in the polymer material.

To solve the above-described problem and achieve the object, a bonding method for bonding a member to a polymer material having a ketone group includes a contact step of bringing an organic compound having an epoxy group and an unsaturated bond-containing group into contact with the polymer material; a grafting step of applying light energy to the polymer material being in contact with the organic material to radicalize the ketone group in the polymer material and reacting the radicalized ketone group in the polymer material with the unsaturated bond-containing group in the organic compound to graft an organic compound chain having the epoxy group based on the organic compound onto a position where the ketone group in the polymer material existed, so that the polymer material having a modified surface is obtained; a member placing step of placing the member in contact with the modified surface of the polymer material; and a bonding step of bonding the member to the modified surface of the polymer material by causing a ring-opening reaction of the epoxy group grafted to the polymer material.

According to this constitution, the ketone group on the surface of the polymer material is radically reacted with the organic compound having the epoxy group and the unsaturated bond-containing group to graft the organic compound chain having the epoxy group based on this organic compound onto the position where the ketone group in this polymer material existed. Thus, the surface of this polymer material can be modified in a manner that the surface of this polymer material is bondable to the member, and the member can be bonded to the surface of this polymer material by causing the ring-opening reaction of this epoxy group.

Alternatively, a bonding method for bonding polymer materials having a ketone group to each other includes a contact step of bringing an organic compound having an epoxy group and an unsaturated bond-containing group into contact with each of the polymer materials; a grafting step of applying light energy to each of the polymer materials being in contact with the organic material to radicalize the ketone group in each of the polymer materials and reacting the radicalized ketone group in the polymer material with the unsaturated bond-containing group in the organic compound to graft an organic compound chain having the epoxy group based on the organic compound onto a position where the ketone group in each of the polymer materials existed, so that the polymer materials having a modified surface are obtained; a facing placing step of placing the modified surfaces of the polymer materials so as to face and overlap each other; and a bonding step of bonding the modified surfaces of the polymer materials to each other by causing a ring-opening reaction of the epoxy group grafted onto each of the polymer materials.

According to this constitution, the ketone group on the surface of each of the polymer materials is radically reacted with the organic compound having the epoxy group and the unsaturated bond-containing group to graft the organic compound chain having the epoxy group based on this organic compound onto a position where the ketone group in each of the polymer materials existed. Thus, the surfaces of the polymer materials can be modified in a manner that the surfaces of the polymer materials are bondable to each other and the surfaces of the polymer materials can be bonded to each other by causing the ring-opening reaction of the epoxy group.

In this constitution, it is preferable that a curing agent having an amine group promoting the ring-opening reaction of the epoxy group grafted to the polymer material is added to the surface to be bonded before the bonding step. According to this constitution, the bonding property on the surface of the polymer material can be enhanced by promoting the ring-opening reaction of the epoxy group by the amine group in the added curing agent.

In the constitution in which the curing agent having an amine group is added, it is preferable that an adhesive having epoxy groups is further added to the surface to be bonded before the bonding step. According to this constitution, the bonding property on the surface of the polymer material can be enhanced by the epoxy groups in the added adhesive.

To solve the above-described problem and achieve the object, a surface-modified material includes a polymer material having hydroxy groups; and a plurality of organic compound chains each having an epoxy group grafted onto a position where each of the hydroxy groups of the polymer material exists on a surface of the polymer material.

According to this constitution, the surface-modified material in which the surface of the polymer material having the ketone group is modified can be provided because the surface-modified material includes the hydroxy group derived from the ketone group on the surface of the polymer material before the modification and the organic compound chain having the epoxy group grafted onto the position of this hydroxy group.

To solve the above-described problem and achieve the object, a joined product includes a polymer material having hydroxy groups; a plurality of organic compound chains each having a hydroxy group generated by a ring-opening reaction of an epoxy group grafted onto a position where each of the hydroxy groups of the polymer material exists on a surface of the polymer material; and a member bonded to the polymer material via the organic compound chains.

According to this constitution, the polymer material having the hydroxy group is a surface-modified material including the hydroxy group derived from the ketone group on a surface of a polymer material before modification and the organic compound chain having the epoxy group grafted onto the position of this hydroxy group; and by causing the ring-opening reaction of this epoxy group, the joined product in which the member is bonded to the surface of the surface-modified material can be provided.

Alternatively, a joined product includes a plurality of polymer materials each having hydroxy groups; and a plurality of organic compound chains each having a hydroxy group generated by a ring-opening reaction of an epoxy group grafted onto a position where each of the hydroxy groups of each of the polymer materials exists on a surface of each of the polymer materials. The polymer materials are joined via a pair of the organic compound chains.

According to this constitution, the polymer materials each having the hydroxy group are surface-modified materials which are formed by modifying surfaces of polymer materials before modification each having the ketone group; the polymer materials each having the hydroxy group each have the hydroxy group derived from the ketone group on the surface of each of the polymer materials before modification and the organic compound chains each having the epoxy group grafted onto the position of this hydroxy group; and by causing the ring-opening reaction of the epoxy groups, the joined product in which the surfaces of these surface-modified materials are bonded to each other can be provided.

### Brief Description of Drawings

FIG. 1 is a flowchart illustrating one example of a surface modification method according to the first embodiment.
FIG. 2 is an explanatory view illustrating the surface modification method of FIG. 1 and a surface-modified material obtained by the surface modification method of FIG. 1.
FIG. 3 is a graph illustrating ATR-FTIR spectra of each of the materials used in the surface modification method of FIG. 1 and the surface-modified material 20 of FIG. 2.
FIG. 4 is a flowchart illustrating one example of the bonding method according to the second embodiment.
FIG. 5 is an explanatory view illustrating the bonding method of FIG. 4.
FIG. 6 is an explanatory view illustrating a joined product obtained by the bonding method of FIG. 4.
FIG. 7 is a first graph illustrating ATR-FTIR spectra in the case where conditions for heat treatment by exposing ethylenediamine on the surface-modified material used in the bonding method of FIG. 4 are changed.
FIG. 8 is a second graph illustrating ATR-FTIR spectra in the case where conditions for heat treatment by exposing ethylenediamine on the surface-modified material used in the bonding method of FIG. 4 are changed.
FIG. 9 is a flowchart illustrating another example of the bonding method according to the third embodiment.
FIG. 10 is an explanatory view illustrating the bonding method of FIG. 9.
FIG. 11 is an explanatory view illustrating a joined product obtained by the bonding method of FIG. 9.
FIG. 12 is an explanatory view illustrating a test specimen used for Examples and Comparative Examples.
FIG. 13 is an explanatory view illustrating a method for preparing a sample according to Comparative Example 1.
FIG. 14 is an explanatory view illustrating a method for preparing a sample according to Example 1.
FIG. 15 is a graph illustrating the results of a fracture test in Example 1 and Comparative Example 1.
FIG. 16 is a graph illustrating the values of the fracture stress of each of the samples according to Example 1 and Comparative Example 1 obtained from the fracture test of FIG. 15.
FIG. 17 is a photograph illustrating the sample of Comparative Example 1 after fracture.
FIG. 18 is a photograph illustrating the sample of Example 1 after fracture.
FIG. 19 is a graph illustrating the results of the fracture test in Example 2 and Comparative Example 2.
FIG. 20 is a photograph illustrating the sample of Comparative Example 2 after fracture.
FIG. 21 is a photograph illustrating the sample of Example 2 after fracture.

### Description of Embodiments

Hereinafter, the embodiments according to the present invention will be described in detail with reference to the drawings. Here, the present invention is not limited by these embodiments. In addition, the constituents in the embodiments include constituents that those skilled in the art can easily replace or constituents that are substantially the same. Furthermore, the constituents described below can be appropriately combined.

### First embodiment

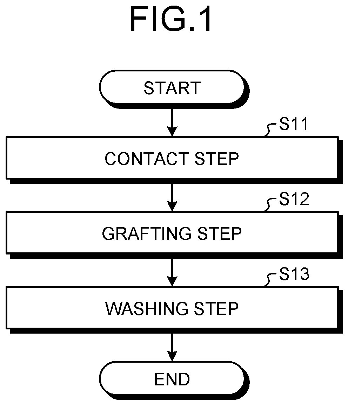

FIG. 1 is a flowchart illustrating one example of a surface modification method according to the first embodiment. As illustrated in FIG. 1, the surface modification method according to the first embodiment includes a contact step S11 and a grafting step S12. As illustrated in FIG. 1, the surface modification method according to the first embodiment preferably further includes a washing step S13. Here, the term "grafting" means that a material having a certain shape and molecular chains forms strong bond due to covalent bond rather than weak adhesion due to intermolecular force or the like.

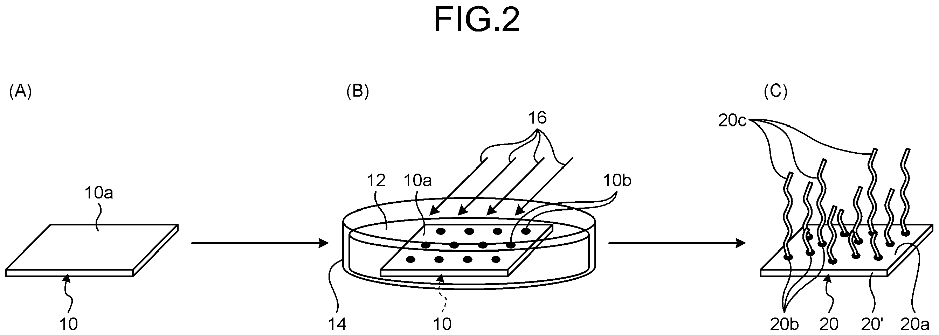

FIG. 2 is an explanatory view illustrating the surface modification method of FIG. 1 and the surface-modified material 20 obtained by the surface modification method of FIG. 1. The surface modification method according to the first embodiment is a method for obtaining the surface-modified material 20 illustrated in (C) of FIG. 2 by modifying the surface 10a of the polymer material 10 having the ketone group illustrated in (A) of FIG. 2. In (A) of FIG. 2, a plate-like polymer material is used as the polymer material 10. However, the present invention is not limited thereto and a polymer material having any shapes may be appropriately used.

Given below is the explanation of the specific example of the polymer material 10 illustrated in (A) of FIG. 2 used for the surface modification method of FIG. 1. The polymer material 10 is, for example, a polymer material in which a polymer compound contained in the polymer material 10 and contributing to the constitution of the polymer material 10 has the ketone group. More specifically, the polymer material 10 is, for example, a polymer material including the compound represented by Chemical Formula (1) below. Note that n in Chemical Formula (1) represents the number of repeats of divalent substituents R¹ and R².

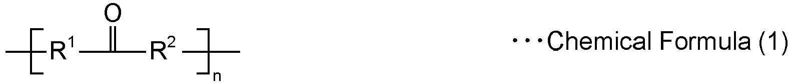

Here, R¹ and R² in Chemical Formula (1) are divalent substituents and specific examples include divalent hydrocarbon groups including: an alkylene group such as a methylene group, an ethylene group, a propylene group, an isopropylene group, a butylene group, an isobutylene group, a tert-butylene group, a pentylene group, a neopentylene group, a hexylene group, and an octylene group; a cycloalkylene group such as a cyclohexylene group; an alkenylene group such as a vinylene group, an allylene group, and a propenylene group; an alkynylene group such as an ethynylene group and a propargylene group; an arylene group such as a phenylene group, a tolylene group, a xylylene group, and a naphthylene group; and an aralkylene group such as a benzylene group, a phenylethylene group, and a phenylpropylene group, and further includes a substituent in which each of these divalent hydrocarbon groups is interrupted with an ether group, a thioether group, a carbonyl group, or a thiocarbonyl group.

It is preferable that at least one of R¹ and R² in Chemical Formula (1) is the arylene group or the aralkylene group. Furthermore, it is more preferable that the aromatic ketone group is formed by bonding the carbon atom constituting the ketone group in Chemical Formula (1) and any one of the carbon atoms constituting a benzene ring included in the arylene group or the aralkylene group in R¹ and R².

In the case where the polymer compound contained in the polymer material 10 and contributing to the constitution of the polymer material 10 has the aromatic ketone group including the ketone group, the polymer material 10 is suitable as a structural material having high heat resistance, fatigue resistance, and chemical resistance and an excellent insulation property and at the same time the surface 10a can be modified using the surface modification method according to the present invention including the surface modification method according to the first embodiment. In addition, in the case where this aromatic ketone group is a benzophenone group in the polymer compound contained in the polymer material 10 and contributing to the constitution of the polymer material 10, these properties are more excellent and the polymer material 10 is more suitable as the structural material, which is more preferable.

The polymer material 10 is more preferable when the polymer compound contained in the polymer material 10 and contributing to the constitution of the polymer material 10 is aromatic poly ether ketone having a linear polymer structure in which a benzene ring is bonded by ether and ketone. More specifically, it is preferable that the polymer compound contained in the polymer material 10 and contributing to the constitution of the polymer material 10 is any one of poly ether ether ketone (PEEK) represented by Chemical Formula (2), polyether ketone (PEK) represented by Chemical Formula (3), and poly ether ketone ketone (PEKK) represented by Chemical Formula (4).

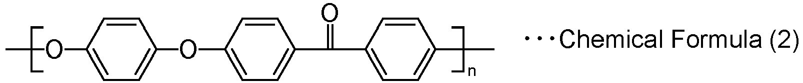

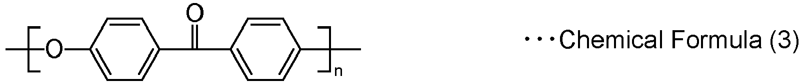

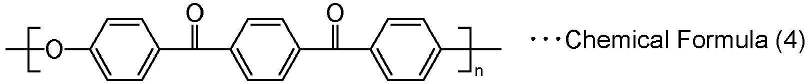

As illustrated in Chemical Formula (2), in poly ether ether ketone, the bonds between the benzene rings are arranged in the order of an ether bond, an ether bond, and a ketone bond. As illustrated in Chemical Formula (3), in poly ether ketone, the bonds between the benzene rings, an ether bond, and a ketone bond are alternatively arranged. As illustrated in Chemical Formula (4), in poly ether ketone ketone, the bonds between the benzene rings are arranged in the order of an ether bond, a ketone bond, and a ketone bond.

In the case where the polymer compound contained in the polymer material 10 and contributing to the constitution of the polymer material 10 is an aromatic poly ether ketone, the polymer material 10 is suitable as a structural material having high heat resistance, fatigue resistance, and chemical resistance and an excellent insulation property and at the same time the surface 10a of the polymer material can be modified using the surface modification method according to the present invention including the surface modification method according to the first embodiment, which is more preferable.

The polymer material 10 is preferably a composite material that further includes reinforcing fibers and is formed by impregnating the reinforcing fibers with the above-described polymer compound. In this case, the reinforcement fibers improve the strength. Here, the reinforcement fibers used in the polymer material 10 is, for example, reinforcement fibers formed by bundling several hundred to several thousand basic fibers of 5 µm or more and 7 µm or less. A suitable basic fiber constituting the reinforcement fiber is, for example, a carbon fiber, a glass fiber, a plastic fiber, an aramid fiber, and a metal fiber.

As illustrated in (B) of FIG. 2, the contact step S11 is a step of contacting the organic compound 12 having the epoxy group and the unsaturated bond-containing group with the surface 10a of the polymer material 10. At the contact step S11, specifically, the polymer material 10 is poured into the container 14 filled with the liquid organic compound 12 so as to immerse the surface 10a of the polymer material 10 in the organic material 12.

Given below is the explanation of the specific example of the organic compound 12 illustrated in (B) of FIG. 2 used at the contact step S11 in the surface modification method illustrated in FIG. 1. Examples of the organic compound 12 include compounds having an epoxy group and an unsaturated bond-containing group, that is, compounds represented by Chemical Formula (5).

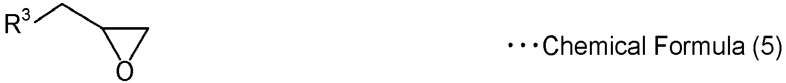

The organic compound 12 preferably has a glycidyl group constituted by further adding a methylene group to an epoxy group as illustrated in Chemical Formula (5). Even in the case where the organic compound 12 has the glycidyl group containing the epoxy group as described above, the surface 10a of the polymer material 10 can be suitably modified at the grafting step S12 described below.

R³ in Chemical Formula (5) is a monovalent substituent containing an unsaturated bond, and specific examples include a divalent hydrocarbon group including: an alkenylene group such as a vinylene group, an allylene group, and a propenylene group; and an alkynylene group such as an ethynylene group and a propargylene group, and further include a substituent in which each of these divalent hydrocarbon groups is interrupted with an ether group, a thioether group, a carbonyl group, or a thiocarbonyl group.

R³ in Chemical Formula (5) is preferably a methacrylic acid group that is an isopropenylene group in which one ether group and one carbonyl group are interposed. In the case where R³ in Chemical Formula (5) is the methacrylic acid group, the organic compound 12 is represented by Chemical Formula (6) below. When the organic compound 12 has a methacrylic acid group containing the unsaturated bond-containing group as described above, the methacrylic acid group is more preferably reacted with the radicalized ketone group in the polymer material 10 at the grafting step S12 described below. Therefore, the surface 10a of the polymer material 10 can be more suitably modified.

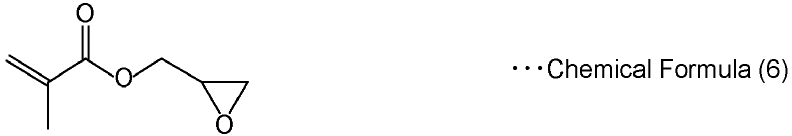

From the above, the organic compound 12 is particularly preferably a monomer of glycidyl methacrylate (GMA) represented by Chemical Formula (6) in which one side is a glycidyl group and the other side is a methacrylic acid group.

As illustrated in (B) of FIG. 2, at the grafting step S12 performed after the contact step S11 is performed as follows. First, light energy 16 is applied to the surface 10a of the polymer material 10 brought into contact with the organic compound 12 at the contact step S11, so as to radicalize the ketone group in the polymer material 10. The chemical formula of this radicalization at the grafting step S12 is represented by Chemical Formula (7) in the case where the polymer material 10 is poly ether ether ketone.

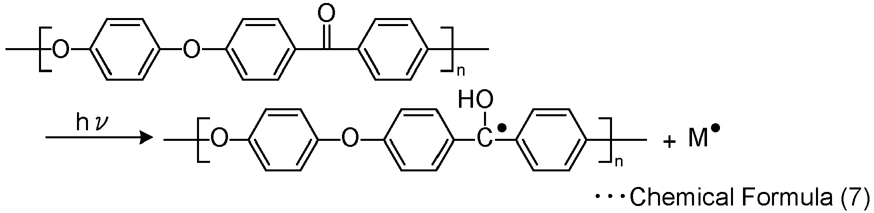

In this chemical reaction, the carbon atom constituting the ketone group in the polymer material 10 is radicalized by applying the light energy 16 represented by hv to the polymer material 10, and the oxygen element forming the double bond with this carbon atom is reacted with a hydroxy group forming a single bond with this carbon atom. More specifically, in Chemical Formula (7) that is the case where the polymer material 10 is a poly ether ether ketone, the carbon atom constituting the ketone group part in the benzophenone group is radicalized to form a semi benzopinacol radical, and the oxygen element forming the double bond with this carbon atom is reacted to form a hydroxy group forming a single bond with this carbon atom. M in Chemical Formula (7) represents an arbitrary monomer in the system.

The wavelength range of the light energy 16 is appropriately determined according to the chemical properties of the ketone group in the polymer material 10. In the case where the polymer material 10 is poly ether ether ketone, the light energy 16 preferably has a wavelength region in the ultraviolet region, and specifically, a wavelength region in the range of 290 nm or more and 360 nm or less. Alternatively, in the case where the polymer material 10 is poly ether ether ketone, as the light energy 16, a high-pressure mercury lamp is preferably used to emit ultraviolet rays having a wavelength of 253.7 nm and ultraviolet rays having a wavelength of 365.0 nm.

The application time of the light energy 16 is also appropriately determined according to the chemical properties of the ketone group in the polymer material 10. In the case where the polymer material 10 is poly ether ether ketone, the irradiation time of the above-described various ultraviolet rays as the light energy 16 is preferably 90 minutes or more and more preferably 120 minutes or more. In the case where the polymer material 10 is poly ether ether ketone, the density and length of the organic compound chains 20c (refer to (C) of FIG. 2) to be graphed can be controlled by controlling the irradiation time of the light energy 16.

As illustrated in (B) of FIG. 2, the grafting step S12 includes a subsequent step of reacting the radicalized ketone group in the polymer material 10 with the unsaturated bond-containing group in the organic compound 12, so as to graft the organic compound chain 20c (refer to (C) of FIG. 2) having the epoxy group based on the organic compound 12 onto the position 10b where the ketone groups in the polymer material 10 existed. The formula of this chemical reaction occurring between the radicalized ketone group in the polymer material 10 and the unsaturated bond-containing group in the organic compound 12 at the grafting step S12 is represented by Chemical Formula (8) in the case where the polymer material 10 is poly ether ether ketone and the organic compound 12 is glycidyl methacrylate.

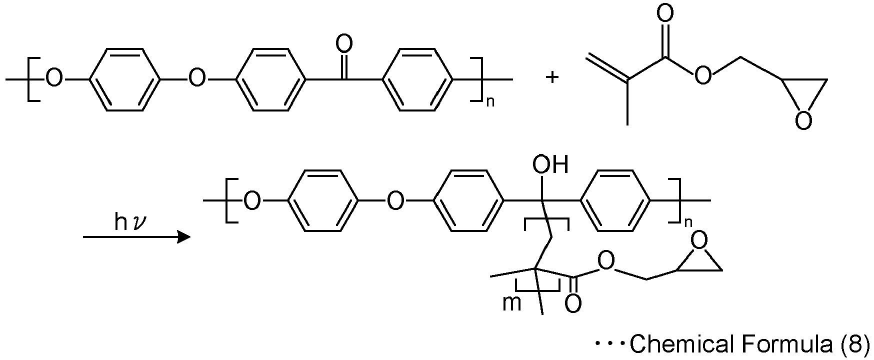

In this chemical reaction, first, the radicalized carbon atom existing at the position where the ketone group is changed into to the hydroxy group in the polymer material 10 by radicalization as described above causes the radical reaction with the unsaturated bond contained in the unsaturated bond-containing group in the organic compound 12. This reaction causes one unsaturated bond of the organic compound 12 to be opened and a covalent bond between one carbon atom constituting the unsaturated bond of the organic compound 12 and the carbon atom constituting this hydroxy group in the polymer material 10 to be formed. At the same time, the other carbon atom constituting the unsaturated bond in the organic compound 12 is radicalized.

Furthermore, the other radicalized carbon atom constituting the unsaturated bond in the organic compound 12 causes a radical reaction with the unsaturated bond contained in the unsaturated bond-containing group in the organic compound 12, whereby the radical polymerization reaction proceeds at the unsaturated bond contained in the unsaturated bond-containing group in the organic compound 12. Thus, the organic compound chain 20c having the epoxy group based on the organic compound 12 (refer to (C) of FIG. 2) is elongated, starting from the carbon atom at the position where the ketone group is changed into the hydroxy group in the polymer material 10.

More specifically, in Chemical Formula (8) that is the case where the polymer material 10 is poly ether ether ketone and the organic compound 12 is glycidyl methacrylate, the semi benzopinacol radical in the polymer material 10 causes a radical reaction with the double bond in the methacrylic acid group in the organic compound 12. A covalent bond is formed between the carbon atom constituting the semi benzopinacol radical and one carbon atom in the methacrylic acid group and at the same time the other carbon atom in the methacrylic acid group is radicalized. Thereafter, the other carbon atom of the radicalized methacrylic acid group causes the radical reaction with the double bond in the methacrylic acid group in the organic compound 12, whereby the radical polymerization proceeds at the double bond in the methacrylic acid group in the organic compound 12. Thus, the organic compound chain 20c (refer to (C) of FIG. 2) having the glycidyl group based on glycidyl methacrylate serving as the organic compound 12 is elongated, starting from the carbon atom at the position where the carbon atom constituting the ketone group part in the benzophenone group in poly ether ether ketone serving as the polymer material 10. In Chemical Formula (8), m represents the number of repeating divalent substituents based on glycidyl methacrylate in the organic compound chain 20c.

As illustrated in (C) of FIG. 2, the surface-modified material 20 obtained through this grafting step S12 includes a polymer material 20' having hydroxyl groups and the organic compound chains 20c having the epoxy groups grafted onto the positions 20b where the hydroxy groups in the polymer material 20' on the surface 20a of the polymer material 20' exist. The surface-modified material 20 is also referred to as a polymer brush because the surface-modified material 20 is a product formed by grafting the organic compound chains 20c, which are polymers, onto the surface 20a like a brush.

The polymer material 20' is derived from the polymer material 10 and is a material in which one bond in the double bond between the carbon atom and the oxygen atom remains as a single bond between the same carbon atom and the oxygen atom to form a hydroxy group, and the other bond in the double bond forms a covalent bond between the same carbon atom and the organic compound chain 20c to form a graft, through the grafting step S12 of the ketone group in the polymer material 10. Therefore, on the surface 20a of the polymer material 20', the organic compound chain 20c is grafted at a position 20b of the hydroxy group in the polymer material 20' originated from the position 10b where the ketone group in the polymer material 10 existed.

The washing step S13 is a step of washing the surface-modified material 20 obtained through the grafting step S12. In the washing step S13, specifically, the obtained surface-modified material 20 is taken out from a container 14 and the entire surface-modified material 20 including the polymer material 20' is washed with tetrahydrofuran (THF). Thereafter, the washed surface-modified material 20 is dried in a vacuo. The surface-modified material 20 undergoes the washing step S13, thereby suitably removing the organic compound 12 remaining without being grafted on the entire surface including the surface 20a of the polymer material 20'.

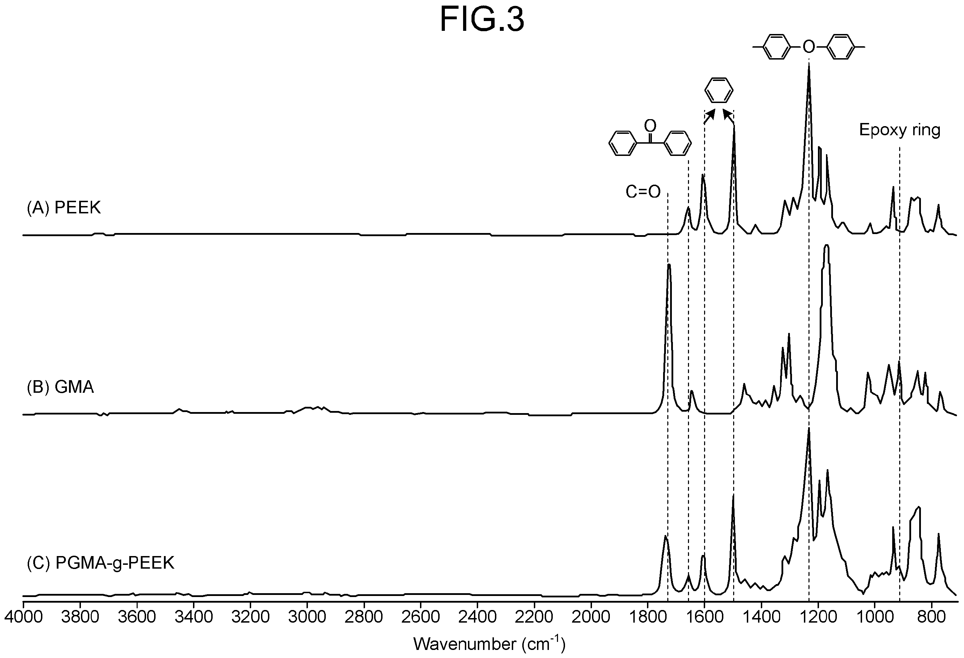

FIG. 3 is a graph illustrating ATR-FTIR spectra of the polymer material 10 and the organic compound 12 which serve as the materials used in the surface modification method of FIG. 1 as well as the surface-modified material 20 of FIG. 2. Here, the ATR-FTIR spectrum refers to a spectrum representing a surface composition obtained using Attenuated Total Reflectance Fourier Transform Infrared Spectroscopy (ATR-FTIR) and is generally illustrated in a graph with the horizontal axis using Kayser (unit: cm⁻¹) that is one of the units of energy based on the reciprocal of the wavelength.

In the graph in FIG. 3, the ATR-FTIR spectrum of the poly ether ether ketone serving as the polymer material 10 illustrated in (A) of FIG. 3, the ATR-FTIR spectrum of glycidyl methacrylate serving as the organic compound 12 illustrated in (B) of FIG. 3, and the ATR-FTIR spectrum of poly ether ether ketone to which the polymer of glycidyl methacrylate is grafted serving as the surface-modified material 20 that is sufficiently washed in washing step S13 illustrated in (C) of FIG. 3 are drawn in a state where these spectra are arranged so that the horizontal axes are aligned and the spectra are shifted along the vertical axis. In the following, for convenience of description, poly ether ether ketone, glycidyl methacrylate, and poly ether ether ketone to which the polymer of glycidyl methacrylate is grafted are suitably abbreviated as PEEK, GMA, and PGMA-g-PEEK, respectively.

In the ATR-FTIR spectra illustrated in FIG. 3, at the positions of 908 cm⁻¹ and 1,730 cm⁻¹ in the horizontal axis, no peak was observed on PEEK but peaks were observed on GMA and PGMA-g-PEEK. The peak observed at 908 cm⁻¹ is a unique peak attributed to ring stretching of the epoxy ring in the glycidyl group, and the peak observed at 1,730 cm⁻¹ is a unique peak attributed to stretching vibration of C=O in an ester group.

In each of the ATR-FTIR spectra illustrated in FIG. 3, at the positions of 1,225 cm⁻¹, 1,490 cm⁻¹, 1,600 cm⁻¹, and 1,651 cm⁻¹ in the horizontal axis, no peak was observed on GMA but peaks were observed on PEEK and PGMA-g-PEEK. The peak observed at 1,225 cm⁻¹ is a unique peak attributed to C-O stretching vibration of an ether group. The peaks observed at 1,490 cm⁻¹ and 1,600 cm⁻¹ are unique peaks attributed to C=C stretching vibration of an aromatic ring. The peak observed at 1,651 cm⁻¹ is a unique peak attributed to C=0 stretching vibration of the benzophenone group.

Based on the results of ATR-FTIR spectrum illustrated in FIG. 3, it is found that PGMA-g-PEEK has a surface that is modified by grafting the polymer of GMA onto the surface of PEEK because the unique peaks observed on PEEK and the unique peaks observed on GMA are observed on PGMA-g-PEEK.

The surface modification method for modifying the surface of the polymer material 10 according to the first embodiment has the constitution as described above. Therefore, the surface 10a of the polymer material 10 can be modified by causing the radical reaction of the ketone group on the surface 10a of the polymer material 10 with the organic compound 12 having the epoxy group and the unsaturated bond-containing group to graft the organic compound chain 20c having the epoxy group based on the organic compound 12 onto the position 10b where the ketone group of the polymer material 10 existed.

In addition, the surface-modified material 20 according to the first embodiment obtained by this surface modification method includes the hydroxy group derived from the ketone group on the surface 10a of the polymer material 10 before the modification and the organic compound chains 20c having the epoxy group grafted onto the position 20b of this hydroxy group and thus can be provided as the product in which the surface of the polymer material 10 having the ketone group is modified.

In the surface modification method for modifying the surface of the polymer material 10 according to the first embodiment, the polymer material 10 further has the aromatic ketone group containing the ketone group and, at the grafting step S12, the organic compound chain 20c having the epoxy group based on the organic compound 12 is grafted onto the position where the aromatic ketone group in the polymer material 10 existed. Therefore, the surface modification method for modifying the surface for the polymer material 10 according to the first embodiment can similarly modify the surface 10a of the polymer material 10 even when the polymer material 10 has low reactivity and thus is considered to be difficult to modify the surface thereof, like a polymer material in which the ketone group existing on the surface is the aromatic ketone group.

In the surface modification method for modifying the surface of the polymer material 10 according to the first embodiment, the organic compound 12 further has a glycidyl group containing an epoxy group and at the grafting step S12, the organic compound chain 20c having the glycidyl group based on the organic compound 12 is grafted to the polymer material 10. Therefore, the surface modification method for modifying the surface of the polymer material 10 according to the first embodiment can similarly contribute to the modification of the surface 10a of the polymer material 10 even when the epoxy group is the glycidyl group.

In the surface modification method for modifying the surface of the polymer material 10 according to the first embodiment, the organic compound 12 further has a methacrylic acid group containing an unsaturated bond-containing group and at the grafting step S12, the radicalized ketone group in the polymer material 10 is reacted with the methacrylic acid group in the organic compound 12. Therefore, the surface modification method for modifying the surface of the polymer material 10 according to the first embodiment can more suitably modify the surface 10a of this polymer material 10 because the methacrylic acid group can more suitably react with the ketone group in the radicalized polymer material 10.

### Second embodiment

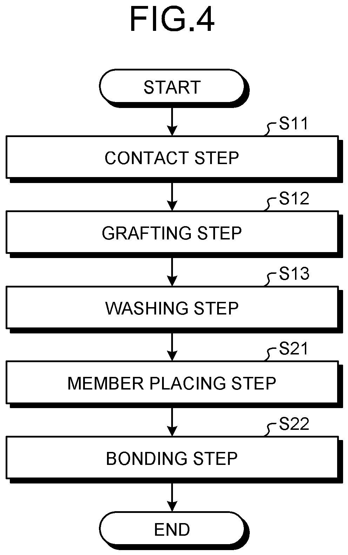

FIG. 4 is a flowchart illustrating one example of the bonding method according to the second embodiment. The bonding method according to the second embodiment is changed from the surface modification method according to the first embodiment in that a member placing step S21 and a bonding step S22 are added after performing the surface modification method. In the detailed description of the bonding method according to the second embodiment, the same reference signs as the reference signs in the first embodiment will be used with respect to the same constitutions as the constitutions of the surface modification method according to the first embodiment and detailed description thereof will be omitted.

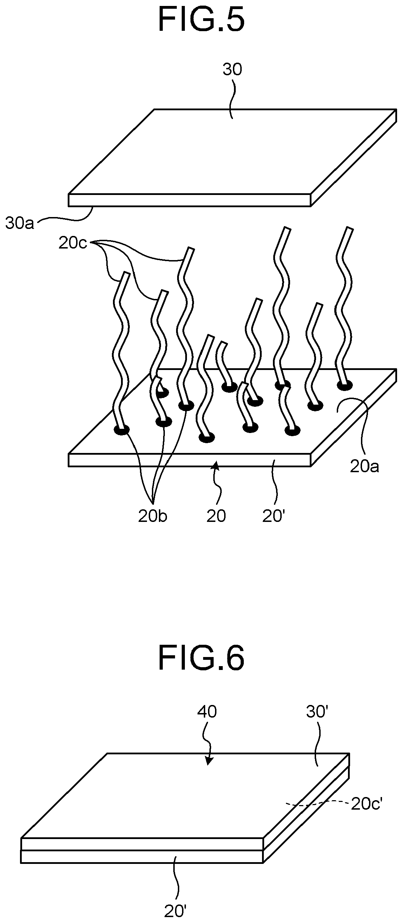

The member placing step S21 is a step of placing the member 30 (refer to FIG. 5) in contact with the surface 20a of the polymer material 20' modified through the grafting step S12.

FIG. 5 is an explanatory view illustrating the bonding method of FIG. 4. In detail, at the member placing step S21, first, the surface 30a that is the surface on the side of the member 30 desired to be bonded is faced to the surface 20a on the side where the organic compound chains 20c are grafted to the polymer material 20' of the surface-modified material 20 as illustrated in FIG. 5. Thereafter, at the member placing step S21, the surface 30a of the member 30 is placed in contact with the surface 20a via the organic compound chains 20c.

At the member placing step S21, a curing agent having amine groups promoting a ring-opening reaction of the epoxy groups in the organic compound chain 20c is preferably added between the surface 20a and the surface 30a of the member 30, in addition to the above organic compound chains 20c, before the bonding step S22 serving as the subsequent step. More specifically, the curing agent added here is preferably ethylenediamine represented by Chemical Formula (9).

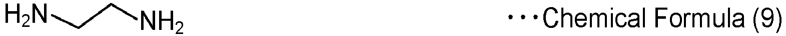

In the case where the curing agent having amine groups is added, the amine groups in the curing agent promote the ring-opening reaction of the epoxy groups, whereby the bonding property on the surface 20a of the polymer material 20' can be enhanced. In addition, in the case where ethylenediamine represented by Chemical Formula (9) is the curing agent, steric hindrance when the amine groups approach the epoxy groups is small, and thus the amine groups of the curing agent can more adequately promote the ring-opening reaction of the epoxy groups.

In addition, in the member placing step S21, an adhesive having epoxy groups is preferably added in addition to the above organic compound chain 20c and the curing agent between the surface 20a and the surface 30a of the member 30 before the bonding step S22 serving as the subsequent step. More specifically, the adhesive added here is preferably Epon (registered trademark) Resin 828 represented by Chemical Formula (10), for example. Note that p in Chemical Formula (10) represents the number of repeating divalent substituents illustrated in the brackets.

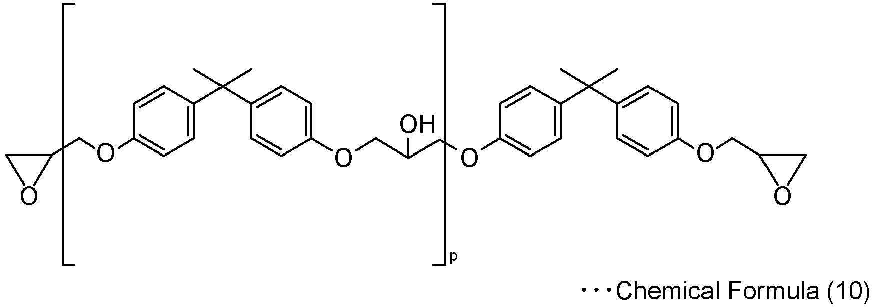

In the case where the adhesive having epoxy groups is further added, the adhesive having epoxy groups acts as an extension of the epoxy group in the grafted organic compound chain 20c and thus the epoxy groups in the organic compound chain 20c can contribute to the bonding as many as possible, whereby the bonding property on the surface 20a of the polymer material 20' can be enhanced.
In addition, in the case where the compound represented by Chemical Formula (10) is the adhesive, the compound can more adequately serve as the extension of the epoxy group of the organic compound chain 20c because the compound has a long chain.

The bonding step S22 is a step of bonding the member 30 to the surface 20a of the polymer material 20' by causing the ring-opening reaction of the epoxy group in the organic compound chain 20c grafted to the polymer material 20' of the surface-modified material 20. In detail, in the bonding step S22, the ring-opening reaction of the epoxy group in the organic compound chain 20c is promoted by heating for a certain period of time, for example, heating at 70°C for 12 hours. Thus, a covalent bond is formed, directly or via another atom, between the carbon atom to which the hydroxy group generated by the ring-opening reaction of the epoxy group in the organic compound chain 20c is bonded and a molecule existing on the surface 30a of the member 30. Consequently, the surface 20a of the surface-modified material 20 and the surface 30a of the member 30 are joined.

FIG. 6 is an explanatory view illustrating a joined product 40 obtained by the bonding method of FIG. 4. As illustrated in FIG. 6, the joined product 40 obtained through the above bonding step S22 includes: the polymer material 20' having the hydroxy groups; a plurality of organic compound chains 20c' having hydroxy groups generated by the ring-opening reaction of epoxy groups grafted at positions 20b (see FIGS. 2 and 5) where the hydroxy groups in the polymer material 20' exist on the surface 20a of the polymer material 20'; and the member 30' bonded to the polymer material 20' via the organic compound chains 20c'.

Here, the organic compound chain 20c' is derived from the organic compound chain 20c in the surface modified-material 20 and is in a state where the epoxy group in the organic compound chain 20c causes the ring-opening reaction through the bonding step S22 to form the hydroxy group and a covalent bond is formed, directly or via another atom, between the organic compound chain 20c' and a molecule or the like on the surface 30a of the member 30. The member 30' is derived from the member 30 and is in a state where a covalent bond is formed, directly or via another atom, between the organic compound chain 20c' and a molecule or the like existing on the surface 30a.

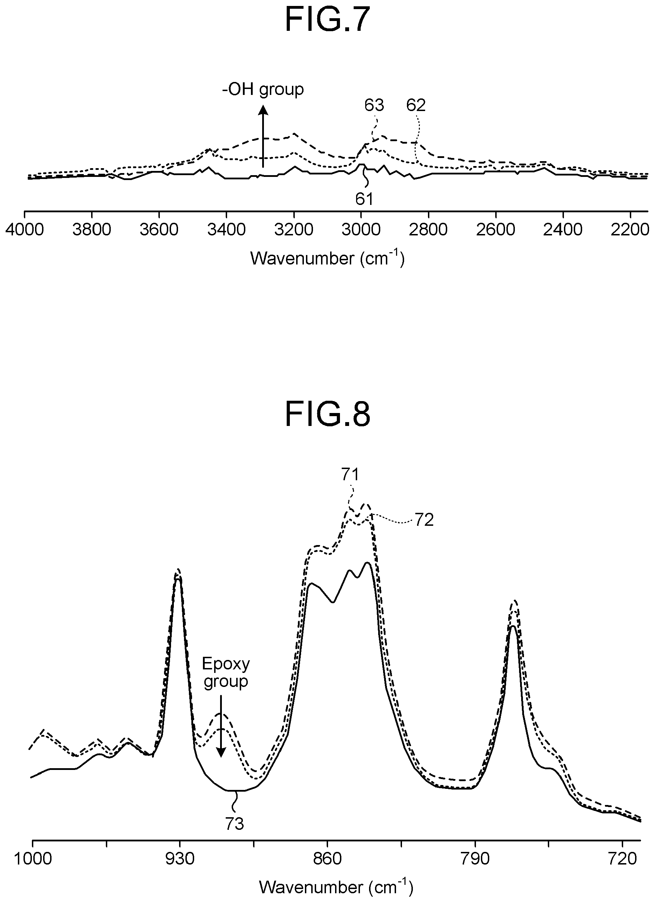

FIG. 7 is a first graph illustrating ATR-FTIR spectra in the case where the conditions for heat treatment by exposing ethylenediamine on the surface-modified material 20 used in the bonding method of FIG. 4 are changed. FIG. 8 is a second graph illustrating ATR-FTIR spectra in the case where the conditions for heat treatment by exposing ethylenediamine on the surface-modified material 20 used in the bonding method of FIG. 4 are changed.

In the graph in FIG. 7, a curve 61, a curve 62, and a curve 63 are drawn in an overlapped manner in the region of the horizontal axis of 2200 cm⁻¹ or more and 4000 cm⁻¹ or less. The curve 61 is an ATR-FTIR spectrum of PGMA-g-PEEK in a state where no ethylenediamine was intentionally exposed and corresponds to an ATR-FTIR spectrum of PGMA-g-PEEK not subjected to the bonding step S32 at all. The curve 62 is an ATR-FTIR spectrum of PGMA-g-PEEK heat-treated at 70°C for 30 minutes in a state where ethylenediamine is intentionally exposed and corresponds to an ATR-FTIR spectrum of PGMA-g-PEEK substantially subjected to the bonding step S32 for 30 minutes. The curve 63 is an ATR-FTIR spectrum of PGMA-g-PEEK heat-treated at 70°C for 120 minutes in a state where ethylenediamine is intentionally exposed and corresponds to an ATR-FTIR spectrum of PGMA-g-PEEK substantially subjected to the bonding step S32 for 120 minutes.

At the position of 3,300 cm⁻¹ in the horizontal axis in each of the ATR-FTIR spectra illustrated in FIG. 7, no peak was observed in the curve 61, the moderate peak was observed in the curve 62, and the moderate peak higher than the peak in the curve 62 was observed in the curve 63. The peak observed at 3,300 cm⁻¹ is a unique peak attributed to the hydroxy group is observed.

In the graph in FIG. 8, a curve 71, a curve 72, and a curve 73 are drawn in an overlapped manner in the region of the horizontal axis of 720 cm⁻¹ or more and 1000 cm⁻¹ or less. The curve 71 is an ATR-FTIR spectrum of PGMA-g-PEEK in a state where no ethylenediamine was intentionally exposed and corresponds to an ATR-FTIR spectrum of PGMA-g-PEEK not subjected to the bonding step S32 at all. The curve 72 is an ATR-FTIR spectrum of PGMA-g-PEEK heat-treated at 70°C for 30 minutes in a state where ethylenediamine is intentionally exposed and corresponds to an ATR-FTIR spectrum of PGMA-g-PEEK substantially subjected to the bonding step S32 for 30 minutes. The curve 73 is an ATR-FTIR spectrum of PGMA-g-PEEK heat-treated at 70°C for 120 minutes in a state where ethylenediamine is intentionally exposed and corresponds to an ATR-FTIR spectrum of PGMA-g-PEEK substantially subjected to the bonding step S32 for 120 minutes.

At the position of 908 cm⁻¹ in the horizontal axis in each of the ATR-FTIR spectra illustrated in FIG. 8, the peak was observed in the curve 71, the peak lower than the peak in the curve 71 was observed in the curve 72, and no peak was observed in the curve 73. The peak observed at 908 cm⁻¹ is a unique peak attributed to the ring stretching of the epoxy ring in the glycidyl group.

Based on the results of the ATR-FTIR spectra illustrated in FIG. 7 and FIG. 8, as the heating time in a state where ethylenediamine is intentionally exposed becomes longer, the unique peak attributed to the hydroxy group is generated and the observed unique peak becomes higher. At the same time, the observed unique peak attributed to the epoxy ring in the glycidyl group becomes lower and is disappeared. Therefore, it is sufficiently inferred that PGMA-g-PEEK generates the hydroxy group by using the epoxy ring in the glycidyl group for the reaction with ethylenediamine by heating in the state where ethylenediamine is intentionally exposed. This supports that, in the case where ethylenediamine is added as the curing agent, the chemical reaction occurs in which the hydroxy group is generated by the ring-opening reaction of the epoxy group in the organic compound chain 20c in the bonding step S22 as described above.

The bonding method according to the second embodiment includes the constitution as described above. Therefore, the surface 10a of the polymer material 10 can be modified into the polymer material 20' bondable to the member 30 by a similar method to the surface modification method according to the first embodiment. Consequently, the member 30 can be bonded to the surface 20a of the polymer material 20' by causing the ring-opening reaction of this epoxy group.

In addition, the joined product 40 according to the second embodiment obtained by this process can be provided as a product in which the member 30 is bonded to the surface 20a of the polymer material 20', by causing the ring-opening reaction of the epoxy group in the surface-modified material 20 including the hydroxy group derived from the ketone group on the surface 10a of the polymer material 10 before the modification, and the organic compound chains 20c having the epoxy group grafted onto the position of thus hydroxy group.

In the bonding method according to the second embodiment, the curing agent having an amine group promoting the ring-opening reaction of the epoxy group grafted to the polymer material 20' is further added onto the surface to be bonded before the bonding step S22. Therefore, in the bonding method according to the second embodiment, the amine group in the added curing agent promotes the ring-opening reaction of the epoxy group, thereby enhancing the bonding property on the surface 20a of the polymer material 20'.

In the bonding method according to the second embodiment, the adhesive having epoxy groups is added to the surface to be bonded before the bonding step S22. Therefore, in the bonding method according to the second embodiment, the bonding property on the surface 20a of the polymer material 20' can be enhanced due to the epoxy group in the added adhesive.

### Third embodiment

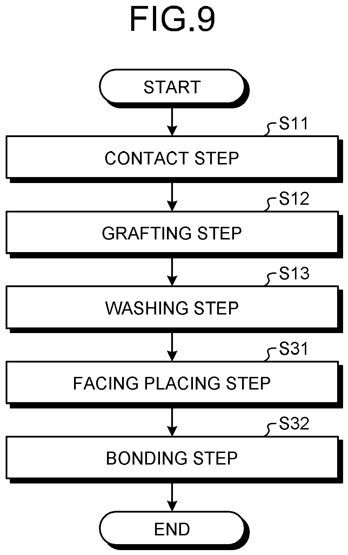

FIG. 9 is a flowchart illustrating another example of the bonding method according to the third embodiment. The bonding method according to the third embodiment is a method in which the member placing step S21 is changed to a facing placing step S31 and, associating with this change, the bonding step S22 is changed to a bonding step S32 in the bonding method according to the second embodiment. In the detailed description of the bonding method according to the third embodiment, the same reference signs as the reference signs in the second embodiment will be used with respect to the same constitutions as the constitutions of the bonding method according to the second embodiment and detailed description thereof will be omitted.

The facing placing step S31 is a step of placing the surfaces 20a of the polymer material 20' modified through the grafting step S12 so as to face and overlap each other.

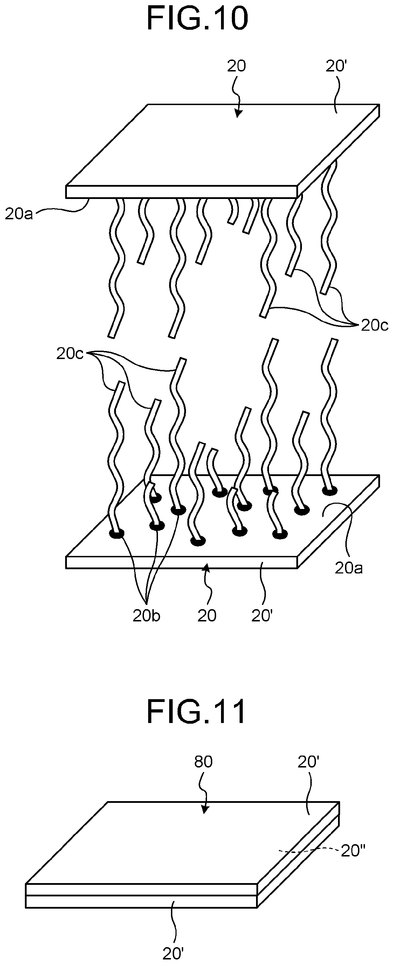

FIG. 10 is an explanatory view illustrating the bonding method of FIG. 9. In detail, as illustrated in FIG. 10, first, a pair of surface-modified materials 20 are prepared and the surface 20a on the side where the organic compound chains 20c are grafted to the polymer material 20' of one of the surface-modified materials 20 and the surface 20a of the polymer material 20' of the other surface-modified material 20 are faced to each other along a direction perpendicular to the surface 20a in the facing placing step S31. Thereafter, in the facing placing step S31, a pair of the surface-modified materials 20 are placed in a state where the surfaces 20a are in contact with each other via their organic compound chains 20c.

The bonding step S32 is a step of bonding the surfaces 20a of a pair of the polymer materials 20' of the surface-modified materials 20 to each other by causing the ring-opening reaction of the epoxy group in the organic compound chain 20c grafted to each of the polymer materials 20' of the surface-modified materials 20. In detail, in the bonding step S32, the ring-opening reaction of the epoxy group in the organic compound chain 20c is promoted by heating for a certain period of time, for example, heating at 70°C for 12 hours, whereby a covalent bond is formed, directly or via another atom, between the carbon atoms each bonded to the hydroxy group generated by the ring-opening reaction of the epoxy group in the organic compound chain 20c. Consequently, the surfaces 20a of a pair of the surface-modified materials 20 are joined with each other.

The chemical formula of the ring-opening reaction of the epoxy group in the bonding step S32 is represented by Chemical Formula (11) in the case where the polymer material 10 is poly ether ether ketone, the organic compound 12 is glycidyl methacrylate, and ethylenediamine is added as the curing agent having an amine group.

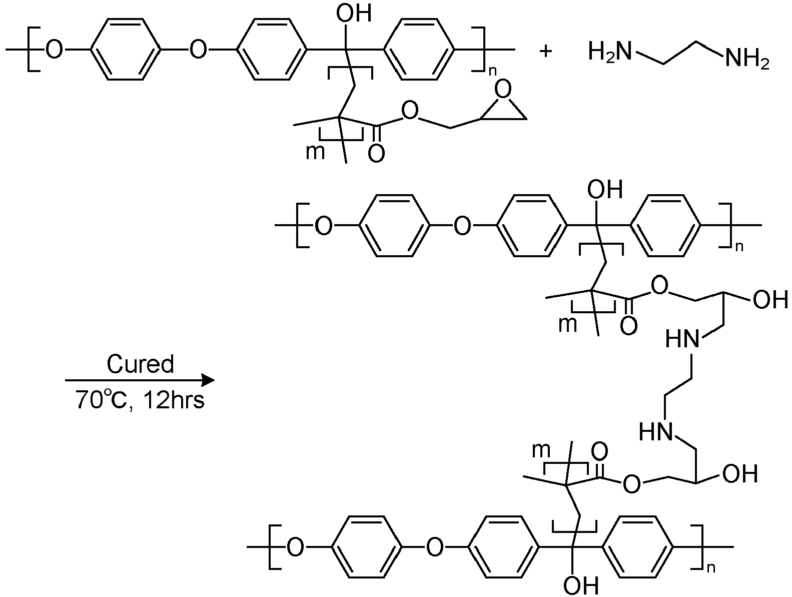

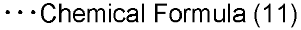

In Chemical Formula (11), one of the nitrogen atoms forming the amine group causes nucleophilic attack to the carbon atom in the edge side having smaller steric hindrance in two carbon atoms forming the epoxy group in the glycidyl group grafted onto the one of the surface-modified materials 20 and thus the ring of this epoxy group is opened. In addition, the other nitrogen atom forming the amine group causes nucleophilic attack to the carbon atom in the edge side having smaller steric hindrance in two carbon atoms forming the epoxy group in the glycidyl group grafted onto the other surface-modified material 20 and thus the ring of this epoxy group is opened. Therefore, each covalent bond is formed between the nitrogen atom and the carbon atom involved in the nucleophilic attack. Thus, the carbon atom having the hydroxy group derived from the epoxy group grafted to one of the surface-modified materials 20 and the carbon having the hydroxy group derived from the epoxy group grafted to the other surface-modified material 20 are bonded via the divalent substituent derived from ethylenediamine. Here, the results of each ATR-FTIR spectrum illustrated in FIG. 7 and FIG. 8 in the second embodiment support the occurrence of the chemical reaction in accordance with Chemical Formula (11) .

FIG. 11 is an explanatory view illustrating a joined product 80 obtained by the bonding method of FIG. 9. As illustrated in FIG. 11, the joined product 80 obtained through the above bonding step S32 includes a plurality of the polymer materials 20', that is, a pair of the polymer materials 20' and a plurality of organic compound chains 20c" having hydroxy groups generated by the ring-opening reaction of the epoxy groups grafted onto positions 20b (refer to FIG. 2 and FIG. 5) where the hydroxy groups of each of the polymer materials 20' exist on the surface 20a of each of the polymer materials 20' and is a product in which the polymer materials 20' are bonded via pairs of the organic compound chains 20c".

Here, the organic compound chain 20c" is derived from the organic compound chain 20c of the surface-modified material 20 and is in a state where the hydroxy group is formed by causing the ring-opening reaction of the epoxy group in the organic compound chain 20c through the bonding step S32 and a covalent bond is formed, directly or via another atom, between the carbon atoms forming the bond with the hydroxy group.

The bonding method according to the third embodiment includes the constitution as described above. Therefore, the surfaces 10a of the polymer materials 10 can be modified into the polymer materials 20' bondable to each other by a similar method to the surface modification method according to the first embodiment. Consequently, the surfaces 20a of the polymer materials 20' can be bonded to each other by causing the ring-opening reaction of the epoxy group.

In addition, the joined product 80 according to the third embodiment obtained by this process can be provided as a product in which the surfaces 20a of these polymer materials 20' are bonded to each other, by causing the ring-opening reaction of the epoxy groups in the surface-modified materials 20 each having the hydroxy group derived from the ketone group on the surface 10a in each of the polymer materials 10 before the modification and the organic compound chain 20c having the epoxy group grafted onto the position of the hydroxy group.

### Examples

Hereinafter, the present invention will be described in more detail with reference to Examples performed in order to clarify the effects of the present invention. The present invention, however, is not limited to following Examples.

### First Example

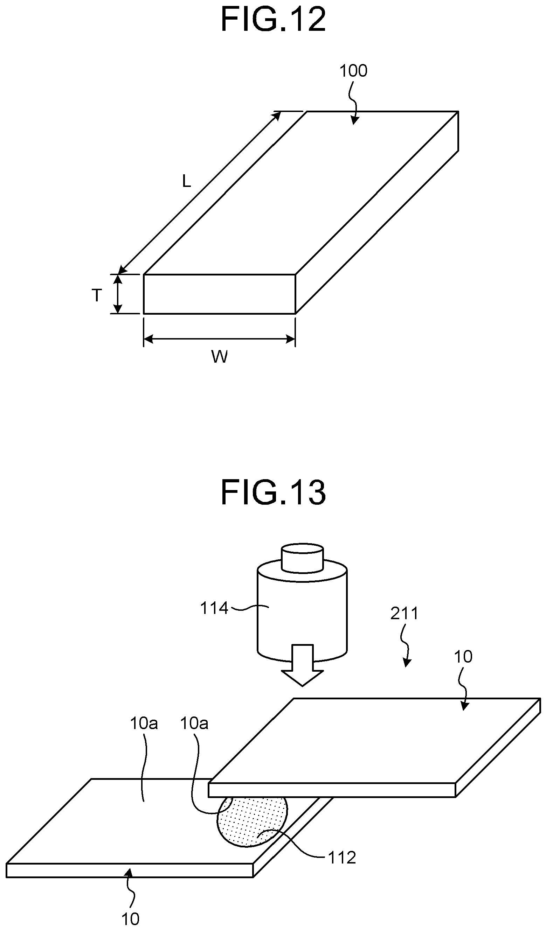

FIG. 12 is an explanatory view illustrating a test specimen 100 used for Examples and Comparative Examples. As illustrated in FIG. 12, the test specimen 100 used in First Example has a plate shape. The shape is described using parameters of a length L in the longitudinal direction, a width W in the width direction that is one direction perpendicular to the longitudinal direction, and a thickness T in the thickness direction perpendicular to the longitudinal direction and the width direction.

FIG. 13 is an explanatory view illustrating a method for preparing a sample 211 according to Comparative Example 1. The sample 211 was prepared as follows. First, as illustrated in FIG. 13, the surfaces 10a of PEEK serving as two polymer materials 10 were faced to each other in the thickness direction so as to be shifted from each other in the longitudinal direction. Here, the two polymer materials 10 used were set to have a length of 15 mm, a width of 15 mm, and a thickness of 1.1 mm. In addition, the region where the surfaces 10a were faced to each other at this time was set to have a length of 9 mm and a width of 15 mm.

Subsequently, as illustrated in FIG. 13, a paste agent 112 formed by sufficiently mixing ethylenediamine as the curing agent and the adhesive represented by Chemical Formula (10) so as to be uniform with each other was added by applying between the surfaces 10a of the two polymer materials 10. Thereafter, as illustrated in FIG. 13, a state where the region where the surfaces 10a of the two polymer materials 10 were faced to each other was pressurized by a weight 114 in the thickness direction was formed. Here, the weight 114 was set to 500 g. Finally, under the state illustrated in FIG. 13, heat treatment was performed at 70°C for 1 hour and thereafter heat treatment was performed at 120°C for 4 hours to prepare the sample 211 according to Comparative Example 1.

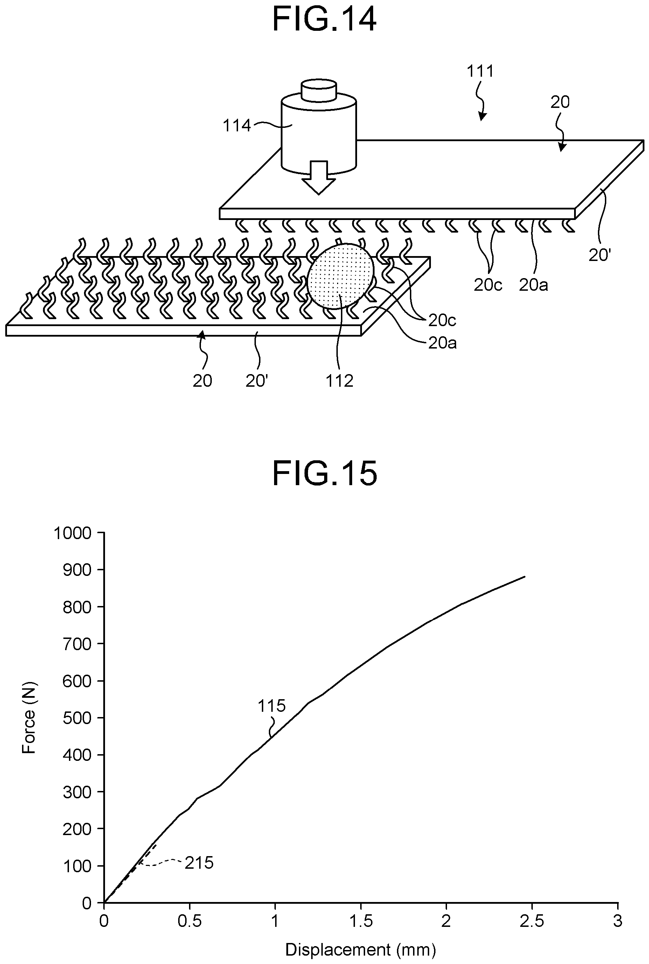

FIG. 14 is an explanatory view illustrating a method for preparing a sample 111 according to Example 1. The sample 111 was prepared as follows. First, as illustrated in FIG. 14, the surfaces 20a on the side where the organic compound chains 20c of PGMA-g-PEEK serving as two surface-modified materials 20 were faced to each other in the thickness direction so as to be shifted from each other in the longitudinal direction. Here, similar to the polymer material 10 used in Comparative Example 1, the two surface-modified materials 20 used were set to having a length of 15 mm, a width of 15 mm, and a thickness of 1.1 mm. In addition, similar to the region where the surfaces 10a are faced to each other in Comparative Example 1, the region where the surfaces 20a were faced to each other at this time was set to having a length of 9 mm and a width of 15 mm.

Subsequently, as illustrated in FIG. 14, the same paste agent 112 as the paste agent used in Comparative Example 1 was added by applying between the surfaces 20a of the two surface-modified materials 20. Thereafter, as illustrated in FIG. 14, a state where the region where the surfaces 20a of the two surface-modified materials 20 were faced each other was pressurized by the same weight 114 as the weight used in Comparative Example 1 in the thickness direction was formed. Finally, under the state illustrated in FIG. 14, heat treatment under the same conditions as the heat treatment in Comparative Example 1 was performed to prepare the sample 111 according to Example 1.

After the sample 211 according to Comparative Example 1 and sample 111 according to Example 1 were prepared, the sample 211 and sample 111 were subjected to a fracture test to examine the resistance to the tensile stress by griping both end parts in the longitudinal direction in which two materials were not overlapped with the griping part of a predetermined tensile tester, applying tensile stress in the direction of separating these both end parts and increasing this tensile stress at constant time intervals, and examining what values of the tensile stress broke these sample 111 and the sample 211.

FIG. 15 is a graph illustrating the results of the fracture test in Example 1 and Comparative Example 1. In FIG. 15, the horizontal axis is a parameter (unit: mm) representing the distance between the gripping parts at both end parts with reference to the initial value of the distance between the gripping ports at both end parts at the time when the fracture test is started, and the vertical axis represents a force (unit: N) in the tensile direction applied to each sample. The graph includes a curve 115 and a curve 215.

The curve 115 illustrates the result when the above fracture test was performed with respect to the sample 111 according to Example 1 and represents that the sample 111 broke at the time when the distance between the gripping parts at both end parts of the sample 111 was about 2.5 mm wider than the initial value and the tensile force of about 900 N was applied to the sample 111. The curve 215 illustrates the result when the above fracture test was performed with respect to the sample 211 according to Comparative Example 1 and represents that the sample 211 broke at the time when the distance between the gripping parts at both end parts of the sample 211 was about 0.3 mm wider than the initial value and the tensile force of about 150 N was applied to the sample 211.

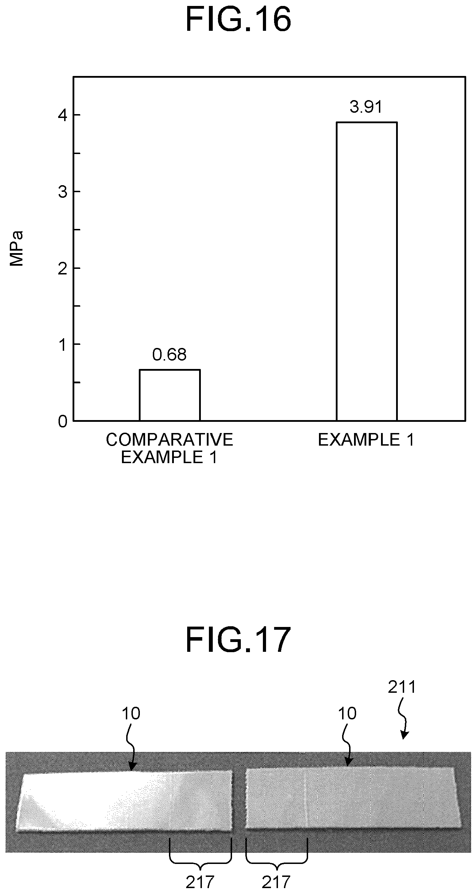

FIG. 16 is a graph illustrating the values of the fracture stress of the samples according to Example 1 and Comparative Example 1 obtained from the fracture test of FIG. 15. As illustrated in FIG. 16, it is found that the sample 211 according to Comparative Example 1 has a shear stress of 0.68 MPa when the bonded part between the two polymer materials 10 was broken based on the result illustrated in the curve 215 in FIG. 15. As illustrated in FIG. 16, it is found that the sample 111 according to Example 1 has a shear stress of 3.91 MPa when the bonded part between the two surface-modified materials 20 was broken on the bases of the result illustrated in the curve 115 in FIG. 15.

From the results illustrated in FIG. 15 and FIG. 16, it is found that the sample 111 according to Example 1 had a resistance to the shear stress of the bonded part that is improved about 6 times as compared with the sample 211 according to Comparative Example 1. In other words, it is found that the resistance to the shear stress of the bonded part can be improved about 6 times by converting PEEK serving as the polymer material 10 into PGMA-g-PEEK serving as the surface-modified material 20 by treating PEEK using the surface modification method according to the first embodiment before the bonding was performed using the same paste agent 112. Therefore, it is found that the resistance to the load can be improved about 40 kg when the shear stress is converted into the load per 1 cm² of the bonded area by treating PEEK serving as the polymer material 10 using the surface modification method according to the first embodiment.

FIG. 17 is a photograph illustrating the sample 211 of Comparative Example 1 after the fracture. The photograph in FIG. 17 is a photograph in which the bonded surface side of the sample 211 after the fracture was taken. As illustrated in FIG. 17, it is found that in the sample 211 after the fracture, the bonded region 217 was perfectly peeled off and the sample 211 was in a state close to the original polymer material 10. In addition, it is found that the value of 0.68 MPa illustrated in FIG. 16 obtained from the fracture test for the sample 211 of Comparative Example 1 was a shear stress value indicating the resistance to peeling of the bonded part.

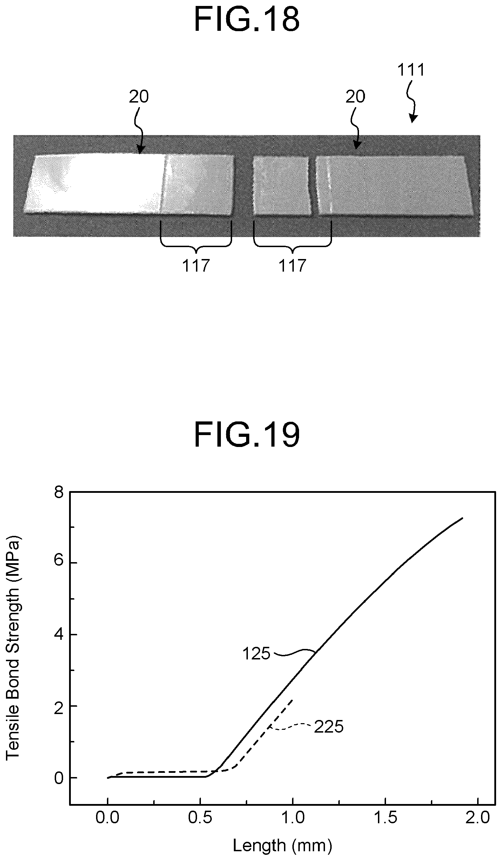

FIG. 18 is a photograph illustrating the sample 111 of Example 1 after the fracture. The photograph in FIG. 18 is a photograph in which the bonded surface side of the sample 111 after the fracture was taken. As illustrated in FIG. 18, it is found that in the sample 111 after the fracture, the original surface-modified material 20 in the left side of the photograph was broken in the bonded region 117. In addition, it is found that the value of 3.91 MPa illustrated in FIG. 16 obtained from the fracture test for the sample 111 of Example 1 is not a shear stress value indicating the resistance to peeling of the bonded part but a tensile stress value representing the resistance to the tensile force of the surface-modified material 20.

As described above, in the first example, it is found that the bonding property can be significantly improved by converting PEEK serving as the polymer material 10 into PGMA-g-PEEK serving as the surface-modified material 20 by treating PEEK using the surface modification method according to the first embodiment. Thus, the resistance to the shear stress at the bonded part is improved at least about 6 times or more and at the same time this resistance can be increased higher than the resistance to the tensile force that PEEK itself serving as the polymer material 10 has.

### Second Example

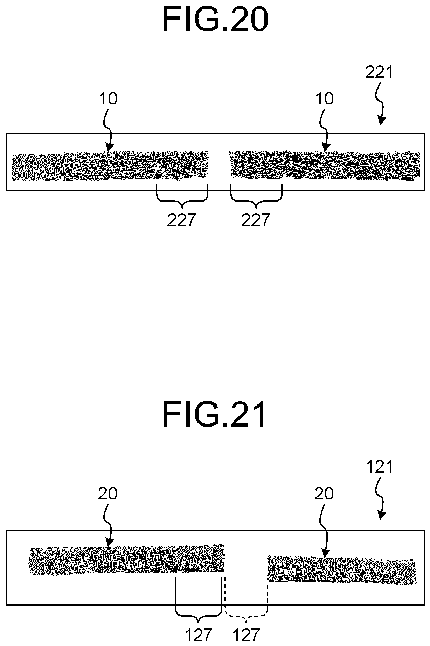

A sample 221 according to Comparative Example 2 (refer to FIG. 20) was prepared as the same method as the method for the sample 211 according to Comparative Example 1. With respect to the sample 221 according to Comparative Example 2, the size of the two polymer materials 10 adopted for the sample 211 according to Comparative Example 1 was changed to a length of 40 mm, a width of 5 mm, and a thickness of 1 mm and the size of the region where the surfaces 10a were faced to each other was changed to a length of 10 mm and a width of 5 mm. Other preparation conditions were determined to be the same as the preparation conditions for the sample 211 according to Comparative Example 1.

A sample 121 according to Example 2 (refer to FIG. 21) was prepared as the same method as the method for the sample 211 according to Comparative Example 1. With respect to the sample 221 according to Comparative Example 2, the size of the two polymer materials 10 adopted for the sample 211 according to Comparative Example 1 was changed to a length of 40 mm, a width of 5 mm, and a thickness of 1 mm and the size of the region where the surfaces 10a were faced to each other was changed to a length of 10 mm and a width of 5 mm. Other preparation conditions were determined to be the same as the preparation conditions for the sample 211 according to Comparative Example 1.

After the sample 221 according to Comparative Example 2 and the sample 121 according to Example 2 were prepared, the same fracture test as the fracture test in First Example was performed for these sample 221 and sample 121.

FIG. 19 is a graph illustrating the results of the fracture test in Example 2 and Comparative Example 2. In FIG. 19, the horizontal axis is a parameter (unit: mm) representing the distance between the gripping parts at both end parts with reference to the initial value of the distance between the gripping parts at both end parts at the time when the fracture test is started and the vertical axis represents a stress (unit: MPa) in the tensile direction applied to each sample. The graph includes a curve 125 and a curve 225.

The curve 125 illustrates the result when the above fracture test was performed with respect to the sample 121 according to Example 1 and represents that the sample 121 broke at the time when the distance between the gripping parts at both end parts of the sample 121 was about 2.0 mm wider than the initial value and the tensile stress of about 7.28 MPa was applied to the sample 121. The curve 225 illustrates the result when the above fracture test is performed with respect to the sample 221 according to Comparative Example 2 and represents that the sample 221 broke at the time when the distance between the gripping parts at both end parts of the sample 221 was about 1.0 mm wider than the initial value and the tensile stress of about 2.20 MPa was applied to the sample 221.

From the results illustrated in FIG. 19, it is found that the sample 121 according to Example 2 had a resistance to the shear stress of the bonded part that is improved about 3.3 times as compared with the sample 221 according to Comparative Example 2. In other words, it is found that the resistance to the shear stress of the bonded part can be improved about 3.3 times by converting PEEK serving as the polymer material 10 into PGMA-g-PEEK serving as the surface-modified material 20 by treating of PEEK using the surface modification method according to the first embodiment before the bonding was performed using the same paste agent 112. Therefore, it is found that the resistance to the load can be improved about 62.5 kg when the shear stress is converted into the load per 1 cm² of the bonded area by treating PEEK serving as the polymer material 10 using the surface modification method according to the first embodiment.

FIG. 20 is a photograph illustrating the sample 221 of Comparative Example 2 after the fracture. The photograph in FIG. 20 is a photograph in which the bonded surface side of the sample 221 after the fracture was taken. As illustrated in FIG. 20, it is found that in the sample 221 after the fracture, the bonded region 227 was completely peeled off and the sample 211 was in a state close to the original polymer material 10. In addition, it is found that the value of 2.20 MPa illustrated in FIG. 19 obtained from the fracture test for the sample 221 of Comparative Example 2 was a shear stress value indicating the resistance to peeling of the bonded part.

FIG. 21 is a photograph illustrating the sample 121 of Example 2 after the fracture. The photograph in FIG. 21 is a photograph of the bonded surface side of the sample 121 after the fracture was taken. As illustrated in FIG. 21, in the sample 121 after the fracture, a small piece originated from the other side of the original surface-modified material 20 in the left side of the photograph continued to be bonded in the bonded region 127 to one side of the original surface-modified material 20 in the right side of the photograph and thus the other side of the original surface-modified material 20 in the left side of the photograph was broken in the bonded region 127. In addition, it is found that the value of 7.28 MPa illustrated in FIG. 19 obtained from the fracture test for the sample 121 according to Example 2 is not a shear stress value indicating the resistance to peeling of the bonded part but a tensile stress value representing the resistance to the tensile force of the surface-modified material 20.

As described above, in the Second Example, it is found that the bonding property can be significantly improved as similar to First Example by converting PEEK serving as the polymer material 10 into PGMA-g-PEEK serving as the surface-modified material 20 by treating PEEK using the surface modification method according to the first embodiment. Thus, the resistance to the shear stress at the bonded part is improved at least about 3.3 times and at the same time this resistance can be increased higher than the resistance to the tensile force that PEEK itself serving as the polymer material 10 has.

### Reference Signs List

- 10, 20': Polymer Material
- 10a, 20a, 30a: Surface
- 10b, 20b: Position
- 12: Organic Compound
- 14: Container
- 16: Light Energy
- 20: Surface-modified Material
- 20c, 20c', 20c": Organic Compound Chain
- 30, 30': Member
- 40, 80: Joined Product
- 61, 62, 63, 71, 72, 73, 115, 125, 215, 225: Curve
- 100: Test Specimen
- 111, 121, 211, 221: Sample
- 112: Paste Agent
- 114: Weight
- 117, 127, 217, 227: Bonded Region

## Claims

1. A surface modification method for modifying a surface of a polymer material having a ketone group, the method comprising:
a contact step of bringing an organic compound having an epoxy group and an unsaturated bond-containing group into contact with the polymer material; and
a grafting step of applying light energy to the polymer material being in contact with the organic material to radicalize the ketone group in the polymer material and reacting the radicalized ketone group in the polymer material with the unsaturated bond-containing group in the organic compound to graft an organic compound chain having the epoxy group based on the organic compound onto a position where the ketone group in the polymer material existed.

2. The surface modification method according to claim 1, wherein
the polymer material has an aromatic ketone group containing a ketone group, and
at the grafting step, the organic compound chain having the epoxy group based on the organic compound is grafted onto a position where the aromatic ketone group in the polymer material existed.

3. The surface modification method according to claim 1 or 2, wherein
the organic compound has a glycidyl group containing an epoxy group, and
at the grafting step, the organic compound chain having the glycidyl group based on the organic compound is grafted to the polymer material.

4. The surface modification method according to any one of claims 1 to 3, wherein
the organic compound has a methacrylic acid group containing an unsaturated bond-containing group, and
at the grafting step, the radicalized ketone group in the polymer material is reacted with the methacrylic acid group in the organic compound.

5. A bonding method for bonding a member to a polymer material having a ketone group, the method comprising:
a contact step of bringing an organic compound having an epoxy group and an unsaturated bond-containing group into contact with the polymer material;
a grafting step of applying light energy to the polymer material being in contact with the organic material to radicalize the ketone group in the polymer material and reacting the radicalized ketone group in the polymer material with the unsaturated bond-containing group in the organic compound to graft an organic compound chain having the epoxy group based on the organic compound onto a position where the ketone group in the polymer material existed, so that the polymer material having a modified surface is obtained;
a member placing step of placing the member in contact with the modified surface of the polymer material; and
a bonding step of bonding the member to the modified surface of the polymer material by causing a ring-opening reaction of the epoxy group grafted to the polymer material.

6. A bonding method for bonding polymer materials having a ketone group to each other, the method comprising:
a contact step of bringing an organic compound having an epoxy group and an unsaturated bond-containing group into contact with each of the polymer materials;
a grafting step of applying light energy to each of the polymer materials being in contact with the organic material to radicalize the ketone group in each of the polymer materials and reacting the radicalized ketone group in the polymer material with the unsaturated bond-containing group in the organic compound to graft an organic compound chain having the epoxy group based on the organic compound onto a position where the ketone group in each of the polymer materials existed, so that the polymer materials having a modified surface are obtained;
a facing placing step of placing the modified surfaces of the polymer materials so as to face and overlap each other; and
a bonding step of bonding the modified surfaces of the polymer materials to each other by causing a ring-opening reaction of the epoxy group grafted onto each of the polymer materials.

7. The bonding method according to claim 5 or 6, wherein a curing agent having an amine group promoting the ring-opening reaction of the epoxy group grafted to the polymer material is added to the surface to be bonded before the bonding step.

8. The bonding method according to claim 7, wherein an adhesive having epoxy groups is further added to the surface to be bonded before the bonding step.

9. A surface-modified material comprising:
a polymer material having hydroxy groups; and
a plurality of organic compound chains each having an epoxy group grafted onto a position where each of the hydroxy groups of the polymer material exists on a surface of the polymer material.

10. A joined product comprising:
a polymer material having hydroxy groups;
a plurality of organic compound chains each having a hydroxy group generated by a ring-opening reaction of an epoxy group grafted onto a position where each of the hydroxy groups of the polymer material exists on a surface of the polymer material; and
a member bonded to the polymer material via the organic compound chains.

11. A joined product comprising:
a plurality of polymer materials each having hydroxy groups; and
a plurality of organic compound chains each having a hydroxy group generated by a ring-opening reaction of an epoxy group grafted onto a position where each of the hydroxy groups of each of the polymer materials exists on a surface of each of the polymer materials, wherein
the polymer materials are joined via a pair of the organic compound chains.
